# EUROPÄISCHE PATENTSCHRIFT

(11) **EP 3 192 723 B1**
(45) Veröffentlichungstag und Bekanntmachung des Hinweises auf die Patenterteilung: **09.12.2020**
(21) Anmeldenummer: 17150827.8
(22) Anmeldetag: 10.01.2017
(51) Int. Cl.: B62D 21/15

(54) **FAHRWERK-HILFSRAHMENANORDNUNG ZUR VERBESSERUNG DER CRASHSICHERHEIT**
CHASSIS-SUBFRAME ARRANGEMENT FOR IMPROVING CRASH PROTECTION
SYSTÈME DE CHÂSSIS AUXILIAIRE DESTINÉ À L'AMÉLIORATION DE LA SÉCURITÉ EN CAS D'ACCIDENT

(30) Priorität: 18.01.2016 DE 102016200518
(43) Veröffentlichungstag der Anmeldung: 19.07.2017
(73) Patentinhaber: Ford Global Technologies, LLC, Dearborn, MI 48126 (US)
(72) Erfinder: Hilmann, Jörgen, 51375 Leverkusen (DE); Salz-Breuer, Martin, 53227 Bonn (DE); Staines, Bradley, Bishops Stortford, Hertfordshire CM23 3PL (GB); Anker, Stephen, Woodbridge, Suffolk IP12 1LD (GB)
(74) Vertreter: Dörfler, Thomas

(56) Entgegenhaltungen:
- DE-A1-102011 009 120
- DE-B3-102011 122 556
- JP-A- 2006 240 325
- US-A1- 2015 061 272

## Beschreibung

Die vorliegende Erfindung betrifft eine Fahrwerk-Hilfsrahmenanordnung für ein Fahrzeug an einer vorzugsweise selbsttragenden Fahrzeugkarosserie zur Verbesserung der Crashsicherheit gemäß dem Oberbegriff des Anspruchs 1.

Moderne Fahrzeugkarosserien sind im Bereich der Vorderradaufhängung mit einem sehr steifen Fahrwerk-Hilfsrahmen ausgestattet, wodurch die Aufnahme von Querkräften und somit die Spurstabilität des Fahrzeugs verbessert wird. Darüber hinaus kann in dieser Bauweise bei der Fahrzeugmontage der komplette Antriebsstrang inklusive der Vorderradaufhängung produktionstechnisch vorteilhaft als komplettes Montagemodul in die Fahrzeugkarosserie eingebaut werden.

Aus dieser Bauweise ergeben sich allerdings Probleme bezüglich der Crashsicherheit der Fahrzeuginsassen. So sind zu deren Schutz insbesondere bei einem Frontalaufprall des Fahrzeugs aus dem Stand der Technik eine Vielzahl von Maßnahmen bekannt, bei denen durch plastische Verformung von Karosserieteilen eine Umwandlung der kinetischen Energie des Fahrzeugs in Deformationsenergie erfolgt und damit zu hohe Beschleunigungen der Insassen verhindert werden sollen. Bei Einbau eines Fahrwerk-Hilfsrahmens verhindert allerdings dessen Steifigkeit, die zur Verbesserung der Spurstabilität eigentlich erwünscht ist, dass sich die Deformationszonen der Karosserie im Bereich des Hilfsrahmens ausreichend verformen können.

Die EP 1 510 444 B1 offenbart beispielsweise eine Fahrwerk-Hilfsrahmenanordnung zur Verbesserung der Crashsicherheit für Fahrzeuge, bei der sich ein an tragenden Karosserieteilen unmittelbar befestigter Fahrwerk-Hilfsrahmen bei einem Frontalaufprall des Fahrzeugs von den Karosserieteilen ablöst und nach hinten verschiebt. Hierbei wird der Hilfsrahmen an seinen in Fahrzeuglängsrichtung gesehen hinteren Aufhängungsstellen durch eine von den tragenden Karosserieteilen gebildete Rampe unter die Fahrgastzelle geschoben. An seinen hinteren Aufhängungsstellen ist der Hilfsrahmen mittelbar über ein gegenüber Längskräften geschwächtes Befestigungsblech mit den tragenden Karosserieteilen verbunden, das bei der nach hinten gerichteten Verschiebebewegung des Hilfsrahmens entsprechend verformt wird.

Aus der EP 2 017 163 B1 ist des Weiteren ein Vorderteilaufbau einer Fahrzeugkarosserie mit einem Fahrwerk-Hilfsrahmen bekannt, der an hinteren Aufhängungsstellen über Befestigungsmittel unmittelbar mit der Fahrzeugkarosserie verbunden ist. Bei einem Frontalaufprall des Fahrzeugs löst sich der Hilfsrahmen an seinen hinteren Aufhängungsstellen von der Fahrzeugkarosserie.

Die US 5,884,963 beschreibt ein Karosseriestrukturelement, das bei einem Frontalaufprall des Fahrzeugs kinetische Energie durch dessen Verformung umwandelt und einen Fahrwerk-Hilfsrahmen bei weitergehender Deformation unter die Fahrgastzelle leitet.

Die US 8,646,792 B2 offenbart einen Fahrzeugrahmenaufbau mit einem Fahrwerk-Hilfsrahmen, mit dem eine Auffangfläche bei einer Verschiebebewegung des Hilfsrahmens infolge eines Frontalaufpralls des Fahrzeugs in Wechselwirkung tritt, um kinetische Aufprallenergie durch zusätzliche Verformungsarbeit umzuwandeln. Die DE102011009120 offenbart ein Opferblech 17,24 mit Befestigungsflaschen in Querrichtung und dazwischen ein Befestigungsmittel 23b eines Hilfsrahmens 11,6.

Zur Verbesserung der Crashsicherheit ist es demnach allgemein vorgesehen, dass sich der Fahrwerk-Hilfsrahmen bei einem Frontalaufprall des Fahrzeugs ab einem bestimmten Verformungsgrad der Karosserieteile vom Fahrzeugaufbau löst und bezüglich der Fahrzeuglängsrichtung unter den Fahrzeugaufbau nach hinten geschoben wird. Hierbei reißen die Befestigungsmittel, beispielsweise Befestigungsbolzen, mit denen der Fahrwerk-Hilfsrahmen gewöhnlich an hochbelastbaren, tragenden Teilen der Fahrzeugkarosserie befestigt ist, entweder aus den tragenden Karosserieteilen heraus oder scheren ab. Durch die heutige intensive Verwendung von beispielsweise Borstählen, die die Eigenschaft aufweisen spröde zu sein, zur Herstellung der hochbelastbaren, tragenden Karosserieteile besteht jedoch das Risiko von Rissen an den oder sogar Brüchen der tragenden Karosserieteile, wenn das Befestigungsmittel des Fahrwerk-Hilfsrahmens bei einem Frontalaufprall des Fahrzeugs aus dem Karosserieteil herausgerissen wird. Dies hat jedoch eine erhebliche Schwächung der tragenden Karosserieteile und damit der Deformationszonen des Fahrzeugs zur Folge. Des Weiteren besteht nach dem Ablösen des Hilfsrahmens und seiner Verschiebung unter die Fahrzeugkarosserie ebenso die Gefahr, dass das herausgerissene Befestigungsmittel, zum Beispiel der Schraubbolzen, im Verlauf seiner Verschiebung noch mit anderen tragenden Karosserieteilen in Wechselwirkung tritt, sich zum Beispiel mit diesen verhakt, wodurch die tragenden Karosserieteile ebenfalls mit der vorstehenden Wirkung beschädigt und damit geschwächt werden können.

Vor diesem Hintergrund liegt der vorliegenden Erfindung die Aufgabe zugrunde, eine Fahrwerk-Hilfsrahmenanordnung für Fahrzeuge bereitzustellen, die bei einem Frontalaufprall des Fahrzeugs eine effektive Verformung der Deformationszonen der Fahrzeugkarosserie ohne Störung durch einen Fahrwerk-Hilfsrahmen ermöglicht.

Diese Aufgabe wird durch eine Fahrwerk-Hilfsrahmenanordnung mit den Merkmalen des Anspruchs 1 gelöst. Weitere, besonders vorteilhafte Ausgestaltungen der Erfindung offenbaren die Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß umfasst eine Fahrwerk-Hilfsrahmenanordnung für ein Fahrzeug, insbesondere Kraftfahrzeug, an einer vorzugsweise selbsttragenden Fahrzeugkarosserie zur Verbesserung der Crashsicherheit einen an der Fahrzeugkarosserie angebundenen Fahrwerk-Hilfsrahmen, der über mehrere Befestigungsmittel mit hochbelastbaren, tragenden Karosserieteilen verbunden ist. Der Fahrwerk-Hilfsrahmen ist wenigstens über ein Befestigungsmittel mittelbar über ein Opferblech mit den tragenden Karosserieteilen verbunden. Hierunter ist zu verstehen, dass der Fahrwerk-Hilfsrahmen über das Befestigungsmittel, vorzugsweise unmittelbar, mit dem Opferblech verbunden ist, das wiederum, ebenfalls vorzugsweise unmittelbar, mit den tragenden Karosserieteilen verbunden ist. Gemäß der Erfindung ist das Opferblech derart ausgelegt, dass das Befestigungsmittel ab einer bestimmten, im Wesentlichen in Fahrzeuglängsrichtung wirkenden Relativkraft zwischen dem Fahrwerk-Hilfsrahmen und dem Opferblech aus diesem unmittelbar bei einer einsetzenden Verschiebebewegung des Fahrwerk-Hilfsrahmens in Fahrzeuglängsrichtung gesehen nach hinten ausreißt, wobei das mit dem Opferblech verbundene Befestigungsmittel mittels des Opferblechs derart relativ zu den tragenden Karosserieteilen angeordnet ist, dass sich das Befestigungsmittel nach dem Ausreißen in Fahrzeuglängsrichtung frei nach hinten bewegen kann, ohne mit den oder anderen tragenden Karosserieteilen in Wechselwirkung zu treten, zum Beispiel sich mit diesen zu verhaken. Auf diese Weise wird sichergestellt, dass sich die Deformationszonen der Fahrzeugkarosserie bei einem Frontalaufprall ungestört durch den Fahrwerk-Hilfsrahmen verformen können, da sich der Hilfsrahmen bei dem Frontalaufprall einerseits ungehindert in Fahrzeuglängsrichtung nach hinten verschieben kann und andererseits hierbei keine tragenden Karosserieteile beschädigt werden. Weiterhin ist erfindungsgemäss vorgesehen, dass das Opferblech wenigstens zwei seitliche, sich im Wesentlichen in Fahrzeuglängsrichtung erstreckende Befestigungsflasche aufweist, die jeweils mit sich seitlich des Opferblechs in Fahrzeuglängsrichtung erstreckenden, tragenden Karosserieteilen verbunden sind, wobei das wenigstens eine Befestigungsmittel an einer ersten Befestigungsstelle mit dem Opferblech verbunden ist, die zwischen den seitlich verlaufenden Befestigungsflaschen angeordnet ist.

Eine vorteilhafte Ausgestaltung der Erfindung sieht vor, dass die erste Befestigungsstelle eine in Fahrzeuglängsrichtung gesehen vorderste erste Befestigungsstelle ist und das Opferblech an einer in Fahrzeuglängsrichtung gesehen vordersten zweiten Befestigungsstelle mit den tragenden Karosserieteilen verbunden ist und das Opferblech an einer in Fahrzeuglängsrichtung gesehen vordersten zweiten Befestigungsstelle mit den tragenden Karosserieteilen verbunden ist. Hierbei ist zu verstehen, dass das Opferblech auch an insgesamt mehreren Befestigungsstellen bzw. Befestigungspunkten mit den tragenden Karosserieteilen verbunden sein kann, zum Beispiel linien- oder flächenförmig, wobei sich aber wenigstens eine Befestigungsstelle als eine in Fahrzeuglängsrichtung gesehen vorderste Befestigungsstelle auszeichnet. Sie stellt den in Fahrzeuglängsrichtung gesehen am weitesten vorne liegenden Befestigungspunkt des Opferblechs am tragenden Karosserieteil dar.

Des Weiteren ist bei dieser Ausgestaltung vorgesehen, dass die vorderste erste Befestigungsstelle in Fahrzeuglängsrichtung gesehen hinter der vordersten zweiten Befestigungsstelle angeordnet ist. Dies stellt sicher, dass das Befestigungsmittel unmittelbar bei der einsetzenden Längsverschiebung des Fahrwerk-Hilfsrahmens aus dem Opferblech auszureißen beginnt, ohne mit den tragenden Karosserieteilen, mit denen das Opferblech verbunden ist, in eine diese schädigende Wechselwirkung zu treten, zum Beispiel durch Verhaken des Befestigungsmittels mit einem tragenden Karosserieteil, und somit den Hilfsrahmen an dieser opferblechseitigen Befestigungsstelle freigibt. Die Ausreißarbeit kann hierbei vorteilhaft zur Umwandlung von kinetischer Aufprallenergie genutzt werden.

Bevorzugt ist das Opferblech gemäß einer weiteren vorteilhaften Ausgestaltung der Erfindung durch konstruktive Mittel gegenüber in Fahrzeuglängsrichtung wirkenden Längskräften definiert geschwächt, um das Ausreißen des Befestigungsmittels am Opferblech zu gewährleisten. Beispielsweise kann die definierte Schwächung des Opferblechs als mindestens eine Bohrung ausgeführt sein, so dass das wenigstens eine mit dem Opferblech verbundene Befestigungsmittel ab einer bestimmten, in Fahrzeuglängsrichtung wirkenden Längskraftbelastung nach hinten aus dem Opferblech ausreißt. Ebenso kann das Opferblech zum Beispiel auch in seiner Dicke an entsprechenden Stellen geschwächt sein.

Eine weitere vorteilhafte Ausgestaltung der Erfindung sieht vor, dass das Opferblech aus einem Material, insbesondere einem Stahl, mit geringerer Festigkeit als das Material der tragenden Karosserieteile gefertigt ist. Diese Eigenschaft stellt ebenfalls sicher, dass das mit dem Opferblech verbundene Befestigungsmittel bei einer ausreichenden Relativkraft zwischen dem Fahrwerk-Hilfsrahmen und dem Opferblech aus diesem ausreißen kann. Andererseits kann beispielsweise über eine entsprechend gewählte Dicke des Opferblechs auch eine für den Betrieb des Fahrzeugs ausreichende Dauerfestigkeit der Anbindung des Fahrwerk-Hilfsrahmens an den tragenden Karosserieteilen sichergestellt werden.

Zur Erzielung einer hohen Steifigkeit der Fahrzeugkarosserie und der Fähigkeit zur Übertragung hoher Lasten können die hochbelastbaren tragenden Karosserieteile wenigstens teilweise aus einem Borstahl gefertigt sein. Obwohl derartige Stähle gewöhnlich relativ spröde sind, besteht durch die erfindungsgemäße Fahrwerk-Hilfsrahmenanordnung unter Verwendung des Opferblechs zur Anbindung des Fahrwerk-Hilfsrahmens an den tragenden Karosserieteilen keine Gefahr der Beschädigung der tragenden Karosserieteile durch das bei einem Frontalaufprall des Fahrzeugs aus dem Opferblech ausreißende Befestigungsmittel. Erfindungsgemäß kann der Borstahl durch jeden anderen geeigneten Stahl mit ähnlichen Eigenschäften ersetzt werden, z. B. durch Zwei-Phasen-Stähle.

Gemäß einer noch weiteren vorteilhaften Ausgestaltung der Erfindung ist das mit dem Opferblech verbundene Befestigungsmittel in einer zur Befestigungsebene am Opferblech beabstandeten zweiten Ebene im Wesentlichen in Fahrzeuglängsrichtung durch ein mit der Fahrzeugkarosserie verbundenes Abstützbauteil abgestützt. Dieses Abstützbauteil, beispielsweise ein Abstützblech, ermöglicht die zusätzliche Aufnahme von in Fahrzeuglängsrichtung wirkenden Kräften, wie sie während des normalen Betriebs des Fahrzeugs auftreten können. Somit kann die Dauerfestigkeit der Anbindung des Fahrwerk-Hilfsrahmens an den tragenden Karosserieteilen verbessert werden. Das Abstützbauteil ist andererseits derart ausgelegt, dass es einer Verschiebebewegung des Fahrwerk-Hilfsrahmens infolge eines Frontalaufpralls des Fahrzeugs im Wesentlichen nicht entgegensteht, zum Beispiel indem es vorzugsweise durch die Verschiebebewegung des Fahrwerk-Hilfsrahmens verformt wird. Das Abstützbauteil fungiert zusätzlich als Momentenabstützung des Befestigungsmittels, mit dem der Fahrwerk-Hilfsrahmen am Opferblech angebunden ist.

In einer bevorzugten Ausführungsform ist das mit dem Opferblech verbundene Befestigungsmittel ein mit einer am Opferblech verschweißten Schweißmutter verschraubter Schraubbolzen. Es sind jedoch auch andere geeignete Muttern denkbar, z. B. Nietmuttern, Hut-Muttern.

Da der Fahrwerk-Hilfsrahmen bei einem Frontalaufprall des Fahrzeugs in der vorbeschriebenen Weise eine Verformung der Deformationszonen der Fahrzeugkarosserie nicht negativ beeinträchtigt, kann der Fahrwerk-Hilfsrahmen zur Verbesserung der Spurstabilität des Fahrzeugs als biege- und torsionssteifes Fahrwerkselement ausgebildet sein.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Zeichnung näher erläutert wird. In dieser Zeichnung zeigen schematisch:
- Fig. 1: eine perspektivische Teilansicht einer Frontpartie eines Fahrzeugs von unten,
- Fig. 2: eine vergrößerte perspektivische Ausschnittsansicht eines in Fig. 1 dargestellten Bereichs der Fahrzeugunterseite,
- Fig. 3: eine ebene Ansicht der in Fig. 2 dargestellten Ausschnittsansicht,
- Fig. 4: eine perspektivische Teilansicht einer Fahrwerk-Hilfsrahmenanordnung gemäß der Erfindung in einem betriebsgemäßen Zustand des Fahrzeugs und
- Fig. 5: die Fahrwerk-Hilfsrahmenanordnung aus Fig. 4 nach einem Frontalaufprall des Fahrzeugs.

In den unterschiedlichen Figuren sind hinsichtlich ihrer Funktion gleichwertige Teile stets mit denselben Bezugszeichen versehen, so dass diese in der Regel auch nur einmal beschrieben werden.

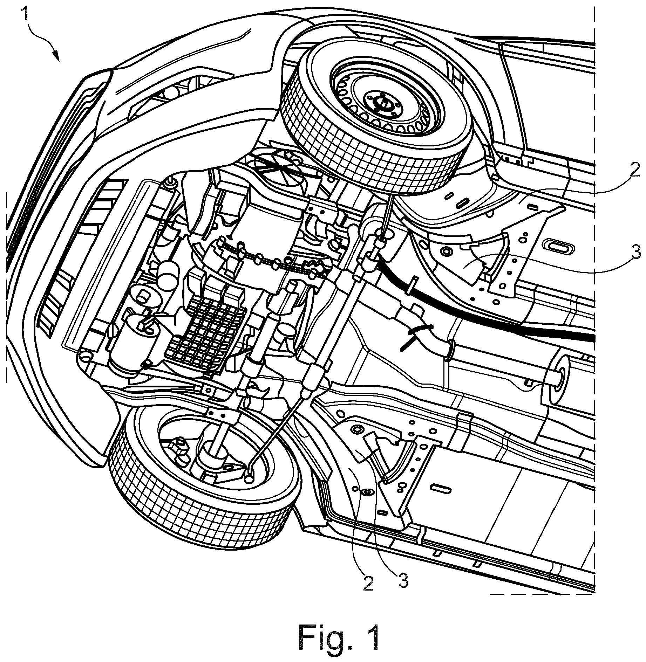

Fig. 1 stellt eine perspektivische Teilansicht einer Frontpartie eines Fahrzeugs 1 von schräg unten dar. Das Fahrzeug 1 umfasst eine lediglich teilweise in Fig. 1 dargestellte Fahrwerk-Hilfsrahmenanordnung gemäß der Erfindung. Das Fahrzeug 1 weist eine selbsttragende Fahrzeugkarosserie auf, von der in Fig. 1 lediglich zwei hochbelastbare, tragende Karosserieteile 2 gesondert gekennzeichnet sind. In Fig. 1 ist weiter zu erkennen, dass mit den tragenden Karosserieteilen 2 jeweils ein Opferblech 3 verbunden ist, dessen Funktion nachfolgend noch genauer beschrieben werden wird.

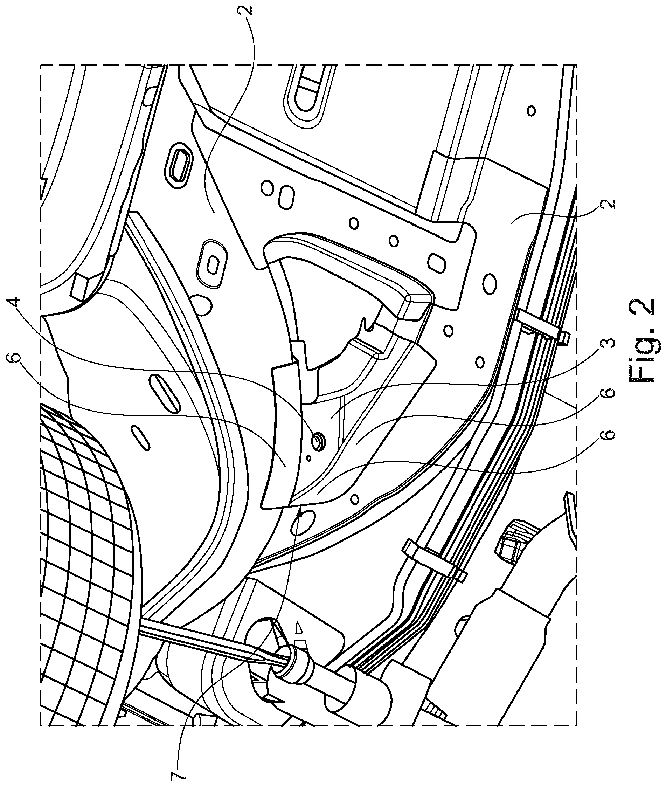

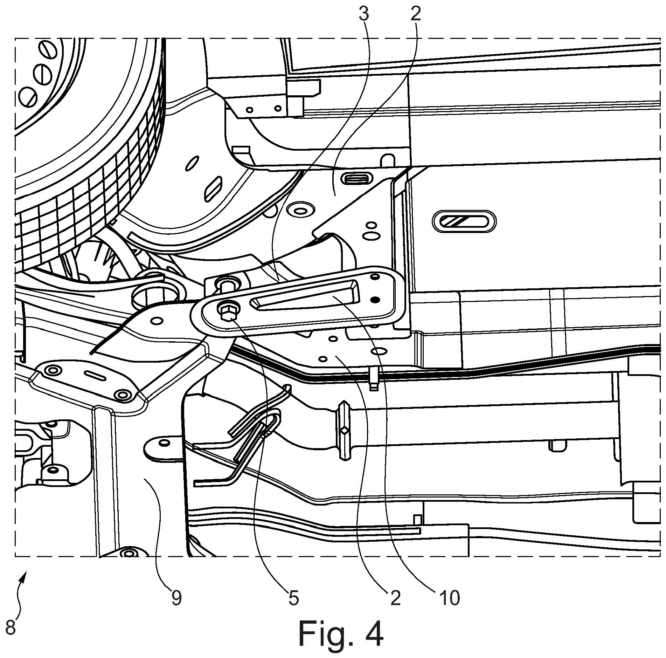

Fig. 2 stellt eine vergrößerte perspektivische Ausschnittansicht eines in Fig. 1 dargestellten Bereichs der Fahrzeugunterseite des Fahrzeugs 1 dar. Insbesondere ist in Fig. 2 der Bereich um das linke tragende Karosserieteil 2 mit dem hiermit verbundenen Opferblech 3 abgebildet. Deutlich ist in Fig. 2 eine in dem Opferblech 3 ausgebildete Aufnahmeöffnung 4 zu erkennen, die als erste, insbesondere in Fahrzeuglängsrichtung gesehen vorderste erste Befestigungsstelle 4 für ein in Fig. 2 nicht dargestelltes Befestigungsmittel 5 (siehe z. B. Fig. 4) fungiert. Bei der in Fig. 2 dargestellten Ausführungsform der Fahrwerk-Hilfsrahmenanordnung ist das Opferblech 3 über Befestigungsflansche 6 mit dem tragenden Karosserieteil 2 fest verbunden. Eine bezüglich der Fahrzeuglängsrichtung zweite vorderste Befestigungsstelle des Opferblechs 3 an den tragenden Karosserieteilen 2 ist in Fig. 2 bei 7 gekennzeichnet.

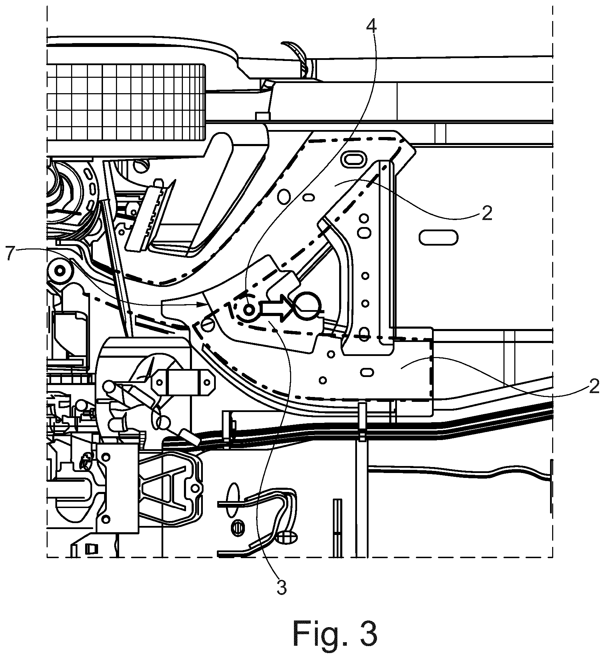

Fig. 3 stellt eine ebene Ansicht der in Fig. 2 dargestellten Ausschnittsansicht dar. In Fig. 3 sind die tragenden Karosserieteile 2 jeweils durch strichpunktierte Umrisslinien hervorgehoben. Deutlich ist in Fig. 3 zu erkennen, dass die vorderste erste Befestigungsstelle 4 des Opferblechs 3 für das Befestigungsmittel 5 (nicht dargestellt) in Fahrzeuglängsrichtung gesehen hinter der vordersten zweiten Befestigungsstelle 7 des Opferblechs 3 an den tragenden Karosserieteilen 2 angeordnet ist. Insbesondere ist die Befestigungsstelle 4 auch hinter der Stelle der tragenden Karosserieteile 2 angeordnet, an der die beiden Karosserieteile 2 miteinander verbunden sind.

Fig. 4 stellt eine perspektivische Teilansicht einer Fahrwerk-Hilfsrahmenanordnung 8 gemäß der Erfindung in einem betriebsgemäßen Zustand des Fahrzeugs 1 dar. Die Hilfsrahmenanordnung 8 umfasst einen an der Fahrzeugkarosserie angebundenen Fahrwerk-Hilfsrahmen 9, der insbesondere als biege- und torsionssteifes Fahrwerkselement ausgebildet ist. In der Teilansicht der Fig. 4 ist wie in den Fig. 2 und 3 lediglich der in Fahrtrichtung des Fahrzeugs 1 gesehen linke Bereich der Hilfsrahmenanordnung 8 abgebildet. Wie in Fig. 4 zu erkennen ist, ist der Fahrwerk-Hilfsrahmen 9 über das Befestigungsmittel 5 mittelbar über das Opferblech 3 mit den tragenden Karosserieteilen 2 verbunden. Das mit dem Opferblech 3 verbundene Befestigungsmittel 5 ist bei der dargestellten Ausführungsform der Fahrwerk-Hilfsrahmenanordnung 8 ein mit einer am Opferblech 3 verschweißten Schweißmutter verschraubter Schraubbolzen.

Weiter ist Fig. 4 zu entnehmen, dass bei der dargestellten Fahrwerk-Hilfsrahmenanordnung 8 das mit dem Opferblech 3 verbundene Befestigungsmittel 5 in einer zur Befestigungsebene des Befestigungsmittels 5 am Opferblech 3 beabstandeten zweiten Ebene im Wesentlichen in Fahrzeuglängsrichtung durch ein mit der Fahrzeugkarosserie bzw. den tragenden Karosserieteilen 2 verbundenes Abstützbauteil 10, zum Beispiel ein Abstützblech, abgestützt ist. Dieses dient in erster Linie dazu, in Fahrzeuglängsrichtung wirkende Kräfte während des Betriebs des Fahrzeugs zusätzlich zum Befestigungsmittel 5 und dem Opferblech 3 aufzunehmen, um so die Dauerfestigkeit der Anbindung des Fahrwerk-Hilfsrahmens 9 an den tragenden Karosserieteilen 2 weiter zu verbessern. Das Abstützbauteil 10 wirkt gleichfalls als Momentenabstützung des Befestigungsmittels 5.

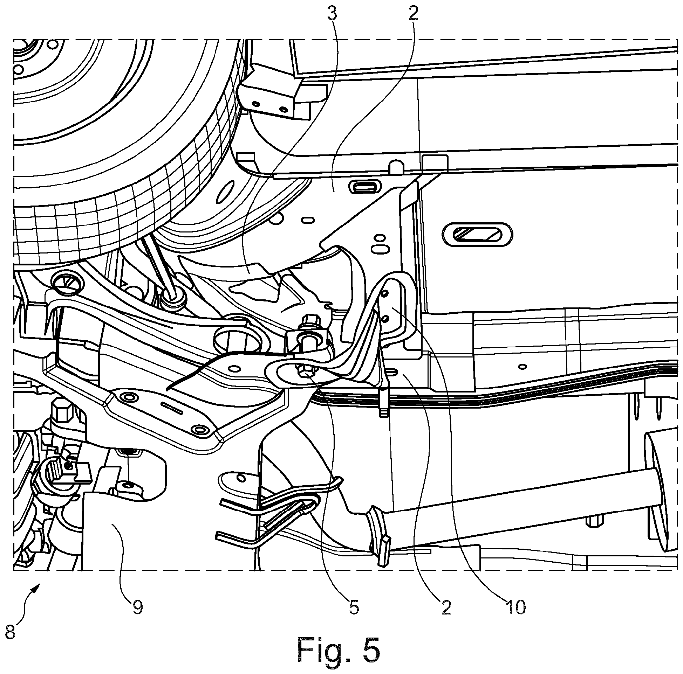

Fig. 5 stellt die Fahrwerk-Hilfsrahmenanordnung 8 aus Fig. 4 nach einem Frontalaufprall des Fahrzeugs 1 und entsprechender Verschiebung des Fahrwerk-Hilfsrahmens 9 in Fahrzeuglängsrichtung nach hinten dar. Wie in Fig. 5 zu erkennen ist, ist das Opferblech 3 der Fahrwerk-Hilfsrahmenanordnung 8 derart ausgelegt, dass das Befestigungsmittel 5 ab einer bestimmten, im Wesentlichen in Fahrzeuglängsrichtung wirkenden Relativkraft zwischen dem Fahrwerk-Hilfsrahmen 9 und dem Opferblech 3 aus diesem unmittelbar bei einer einsetzenden Verschiebebewegung des Fahrwerk-Hilfsrahmens 9 in Fahrzeuglängsrichtung gesehen nach hinten ausreißt. Durch die hierin beschriebene Anordnung des Opferblechs 3 an den tragenden Karosserieteilen 2 und durch die hiermit festgelegte geometrische Anordnung des Befestigungsmittels 5 relativ zu den tragenden Karosserieteilen 2, kann sich das Befestigungsmittel 5 nach dem Ausreißen in Fahrzeuglängsrichtung frei nach hinten bewegen, ohne mit den tragenden Karosserieteilen 2 oder anderen tragenden Karosserieteilen in Wechselwirkung zu treten, sich zum Beispiel mit diesen zu verhaken und diese hierdurch zu beschädigen. Wie bereits weiter oben beschrieben wurde, ist das Befestigungsmittel 5 hierzu an der ersten Befestigungsstelle 4 (s. Fig. 2 und 3) bzw. der Aufnahmeöffnung 4 im Opferblech 3 mit diesem verbunden, wobei das Opferblech 3 wiederum an der in Fahrzeuglängsrichtung gesehen vordersten zweiten Befestigungsstelle 7 mit den tragenden Karosserieteilen 2 verbunden ist. Da die vorderste erste Befestigungsstelle 4 in Fahrzeuglängsrichtung gesehen hinter der vordersten zweiten Befestigungsstelle 7 angeordnet ist, beginnt das Befestigungselement 5 unmittelbar nach der einsetzenden Verschiebebewegung des Fahrwerk-Hilfsrahmens 9 in Fahrzeuglängsrichtung nach hinten infolge eines Frontalaufpralls des Fahrzeugs 1, aus dem Opferblech 3 auszureißen. Begünstigt wird dieser Vorgang zusätzlich dadurch, dass das Opferblech 3 bei dem dargestellten Ausführungsbeispiel der Fahrwerk-Hilfsrahmenanordnung 8 aus einem wesentlich duktileren Stahl gefertigt ist als die tragenden Karosserieteile 2, die bevorzugt aus einem Borstahl gefertigt sind.

Wie in Fig. 5 zu erkennen ist, schränkt das Abstützbauteil 10 die Hauptfunktion des Opferblechs 3, das Befestigungsmittel 5 im Falle eines Frontalaufpralls des Fahrzeugs 1 und entsprechender Verschiebung des Fahrwerk-Hilfsrahmens 9 in Fahrzeuglängsrichtung nach hinten ausreißen zu lassen, im Wesentlichen nicht ein. Das Abstützbauteil 10 wird durch die Verschiebebewegung des Fahrwerk-Hilfsrahmens 9 nach hinten schlicht verformt.

Die erfindungsgemäße Fahrwerk-Hilfsrahmenanordnung wurde anhand eines in den Figuren dargestellten Ausführungsbeispiels näher erläutert. Die Fahrwerk-Hilfsrahmenanordnung ist jedoch nicht auf die hierin beschriebene Ausführungsform beschränkt, sondern umfasst auch gleich wirkende weitere Ausführungsformen. So ist es beispielsweise denkbar, die erfindungsgemäße Fahrwerk-Hilfsrahmenanordnung analog auch an einem Fahrzeugheck zur Verbesserung der Crashsicherheit bei einem Heckaufprall anzuwenden.

In bevorzugter Ausführung wird die erfindungsgemäße Fahrwerk-Hilfsrahmenanordnung in einem Kraftfahrzeug verwendet.

### Bezugszeichenliste

- 1: Fahrzeug
- 2: Hochbelastbares, tragendes Karosserieteil
- 3: Opferblech
- 4: Aufnahmeöffnung, vorderste erste Befestigungsstelle
- 5: Befestigungsmittel
- 6: Befestigungsflansch
- 7: Vorderste zweite Befestigungsstelle
- 8: Fahrwerk-Hilfsrahmenanordnung
- 9: Fahrwerk-Hilfsrahmen
- 10: Abstützbauteil

## Patentansprüche

1. Fahrwerk-Hilfsrahmenanordnung für ein Fahrzeug (1) an einer vorzugsweise selbsttragenden Fahrzeugkarosserie zur Verbesserung der Crashsicherheit, umfassend einen an der Fahrzeugkarosserie angebundenen Fahrwerk-Hilfsrahmen (9), der über mehrere Befestigungsmittel (5) mit hochbelastbaren, tragenden Karosserieteilen (2) verbunden ist, wobei der Fahrwerk-Hilfsrahmen (9) wenigstens über ein Befestigungsmittel (5) mittelbar über ein Opferblech (3) mit den tragenden Karosserieteilen (2) verbunden ist, wobei das Opferblech (3) derart ausgelegt ist, dass das Befestigungsmittel (5) ab einer bestimmten, im Wesentlichen in Fahrzeuglängsrichtung wirkenden Relativkraft zwischen dem Fahrwerk-Hilfsrahmen (9) und dem Opferblech (3) aus diesem unmittelbar bei einer einsetzenden Verschiebebewegung des Fahrwerk-Hilfsrahmens (9) in Fahrzeuglängsrichtung gesehen nach hinten ausreißt, wobei das mit dem Opferblech (3) verbundene Befestigungsmittel (5) mittels des Opferblechs (3) derart relativ zu den tragenden Karosserieteilen (2) angeordnet ist, dass sich das Befestigungsmittel (5) nach dem Ausreißen in Fahrzeuglängsrichtung frei nach hinten bewegen kann, ohne mit den oder anderen tragenden Karosserieteilen (2) in Wechselwirkung zu treten,
**dadurch gekennzeichnet, dass**
das Opferblech (3) wenigstens zwei seitliche, sich im Wesentlichen in Fahrzeuglängsrichtung erstreckende Befestigungsflansche (6) aufweist, die jeweils mit sich seitlich des Opferblechs (3) in Fahrzeuglängsrichtung erstreckenden, tragenden Karosserieteilen (2) fest verbunden sind, wobei das wenigstens eine Befestigungsmittel (5) an einer ersten Befestigungsstelle (4) mit dem Opferblech (3) verbunden ist, die zwischen den seitlich verlaufenden Befestigungsflanschen (6) angeordnet ist.

2. Hilfsrahmenanordnung nach Anspruch 1,
**dadurch gekennzeichnet, dass**
die erste Befestigungsstelle (4) eine in Fahrzeuglängsrichtung gesehen vorderste erste Befestigungsstelle (4) ist und das Opferblech (3) an einer in Fahrzeuglängsrichtung gesehen vordersten zweiten Befestigungsstelle (7) mit den tragenden Karosserieteilen (2) verbunden ist und die vorderste erste Befestigungsstelle (4) in Fahrzeuglängsrichtung gesehen hinter der vordersten zweiten Befestigungsstelle (7) angeordnet ist.

3. Hilfsrahmenanordnung nach Anspruch 1 oder 2,
**dadurch gekennzeichnet, dass**
das Opferblech (3) durch konstruktive Mittel gegenüber in Fahrzeuglängsrichtung wirkenden Längskräften definiert geschwächt ist.

4. Hilfsrahmenanordnung nach dem vorhergehenden Anspruch,
**dadurch gekennzeichnet, dass**
die definierte Schwächung des Opferblechs (3) als mindestens eine Bohrung ausgeführt ist, so dass das wenigstens eine mit dem Opferblech (3) verbundene Befestigungsmittel (5) ab einer bestimmten, in Fahrzeuglängsrichtung wirkenden Längskraftbelastung nach hinten aus dem Opferblech (3) ausreißt.

5. Hilfsrahmenanordnung nach einem der vorhergehenden Ansprüche,
**dadurch gekennzeichnet, dass**
das Opferblech (3) aus einem Material, insbesondere einem Stahl, mit geringerer Festigkeit als das Material der tragenden Karosserieteile (2) gefertigt ist.

6. Hilfsrahmenanordnung nach einem der vorhergehenden Ansprüche,
**dadurch gekennzeichnet, dass**
die hochbelastbaren tragenden Karosserieteile (2) wenigstens teilweise aus einem Borstahl gefertigt sind.

7. Hilfsrahmenanordnung nach einem der vorhergehenden Ansprüche,
**dadurch gekennzeichnet, dass**
das mit dem Opferblech (3) verbundene Befestigungsmittel (5) in einer zur Befestigungsebene am Opferblech (3) beabstandeten zweiten Ebene im Wesentlichen in Fahrzeuglängsrichtung durch ein mit der Fahrzeugkarosserie verbundenes Abstützbauteil (10) abgestützt ist.

8. Hilfsrahmenanordnung nach einem der vorhergehenden Ansprüche,
**dadurch gekennzeichnet, dass**
das mit dem Opferblech (3) verbundene Befestigungsmittel (5) ein mit einer am Opferblech (3) verschweißten Schweißmutter verschraubter Schraubbolzen ist.

9. Hilfsrahmenanordnung nach einem der vorhergehenden Ansprüche,
**dadurch gekennzeichnet, dass**
der Fahrwerk-Hilfsrahmen (9) als biege- und torsionssteifes Fahrwerkselement ausgebildet ist.

## Claims

1. Chassis-subframe arrangement for a vehicle (1) on a preferably self-supporting vehicle body for improving crash protection, comprising a chassis-subframe (9) which is attached to the vehicle body and which is connected via a plurality of fastening means (5) to highly loadable load-bearing body parts (2), wherein the chassis subframe (9) is connected to the load-bearing body parts (2) by at least one fastening means (5) indirectly via a sacrificial plate (3),
wherein
the sacrificial plate (3) is designed such that, from a specific relative force acting substantially in the vehicle longitudinal direction between the chassis subframe (9) and the sacrificial plate (3), the fastening means (5) is pulled out of said sacrificial plate, immediately in the case of a displacement movement of the chassis subframe (9) occurring, to the rear, viewed in the vehicle longitudinal direction, wherein the fastening means (5) connected to the sacrificial plate (3) is arranged by means of the sacrificial plate (3) relative to the load-bearing body parts (2) such that, after being pulled out, the fastening means (5) is able to move freely to the rear in the vehicle longitudinal direction, without interacting with the, or other, load-bearing body parts (2),
**characterized in that**
the sacrificial plate (3) has at least two lateral fastening flanges (6) which extend substantially in the vehicle longitudinal direction and are each fixedly connected to load-bearing body parts (2) extending to the side of the sacrificial plate (3) in the vehicle longitudinal direction, wherein the at least one fastening means (5) is connected to the sacrificial plate (3) at a first fastening point (4) which is arranged between the laterally extending fastening flanges (6).

2. Subframe arrangement according to Claim 1, **characterized in that**
the first fastening position (4) is a first fastening position (4) furthest to the front viewed in the vehicle longitudinal direction, and the sacrificial plate (3) is connected to the load-bearing body parts (2) at a second fastening position (7) furthest to the front viewed in the vehicle longitudinal direction, and the first fastening position (4) furthest to the front viewed in the vehicle longitudinal direction is arranged behind the second fastening position (7) furthest to the front.

3. Subframe arrangement according to Claim 1 or 2, **characterized in that**
the sacrificial plate (3) is weakened in a defined manner by structural means relative to longitudinal forces acting in the vehicle longitudinal direction.

4. Subframe arrangement according to the preceding claim,
**characterized in that**
the defined weakened portion of the sacrificial plate (3) is designed as at least one bore so that from a specific longitudinal force loading acting in the vehicle longitudinal direction the at least one fastening means (5) connected to the sacrificial plate (3) is pulled out to the rear out of the sacrificial plate (3).

5. Subframe arrangement according to one of the preceding claims,
**characterized in that**
the sacrificial plate (3) is produced from a material, in particular a steel, having lower strength than the material of the load-bearing body parts (2).

6. Subframe arrangement according to one of the preceding claims
**characterized in that**
the highly loadable load-bearing body parts (2) are produced at least partially from a boron steel.

7. Subframe arrangement according to one of the preceding claims,
**characterized in that**
the fastening means (5) connected to the sacrificial plate (3) in a second plane spaced apart from the fastening plane on the sacrificial plate (3) is substantially supported in the vehicle longitudinal direction by a support component (10) connected to the vehicle body.

8. Subframe arrangement according to one of the preceding claims,
**characterized in that**
the fastening means (5) connected to the sacrificial plate (3) is a screw bolt screwed to a weld nut welded to the sacrificial plate (3).

9. Subframe arrangement according to one of the preceding claims,
**characterized in that**
the chassis subframe (9) is configured as a flexurally stiff and torsionally stiff chassis element.

## Revendications

1. Ensemble de cadre auxiliaire de train de roulement d'un véhicule (1), de préférence autoportant, disposé sur le châssis du véhicule en vue d'améliorer la sécurité en cas d'accident,
comprenant un cadre auxiliaire (9) de train de roulement relié au châssis du véhicule et par plusieurs moyens de fixation (5) à des parties portantes (2) du châssis qui résistent à de fortes charges,
le cadre auxiliaire (9) de train de roulement étant relié aux parties portantes (2) du châssis au moins par l'intermédiaire d'un moyen de fixation (5) et indirectement par l'intermédiaire d'une tôle sacrifiée (3),
la tôle sacrifiée (3) étant conçue de telle sorte que le moyen de fixation (5) se déchire directement de la tôle sacrifiée à partir d'une force relative définie, agissant essentiellement dans le sens de la longueur du véhicule entre le cadre auxiliaire (9) de train de roulement et la tôle sacrifiée (3) lorsqu'un déplacement de coulissement du cadre auxiliaire (9) de train de roulement s'établit vers l'arrière dans le sens de la longueur du véhicule,
le moyen de fixation (5) relié à la tôle sacrifiée (3) étant disposé au moyen de la tôle sacrifiée (3) par rapport aux parties portantes (2) du châssis de telle sorte qu'après la déchirure, le moyen de fixation (5) puisse se déplacer librement vers l'arrière dans le sens de la longueur du véhicule sans interagir avec les parties portantes (2) du châssis ou d'autres parties portantes du châssis,
**caractérisé en ce que**
la tôle sacrifiée (3) présente au moins deux brides de fixation (6) s'étendant essentiellement dans le sens de la longueur du véhicule et reliées chacune solidairement à des parties portantes (2) du châssis qui s'étendent latéralement par rapport à la tôle sacrifiée (3) dans le sens de la longueur du véhicule et
**en ce que** les ou les moyens de fixation (5) sont reliés à la tôle sacrifiée (3) en un premier emplacement de fixation (4) disposé entre les brides de fixation (6) qui s'étendent latéralement.

2. Ensemble de cadre auxiliaire selon la revendication 1, **caractérisé en ce que** le premier emplacement de fixation (4) est un premier emplacement de fixation (4) disposé en avant dans le sens de la longueur du véhicule, **en ce que** la tôle sacrifiée (3) est reliée aux parties portantes (2) du châssis en un deuxième emplacement de fixation (7) disposé en avant dans le sens de la longueur du véhicule et **en ce que** le premier emplacement de fixation (4) est disposé derrière le deuxième emplacement de fixation (7) situé en avant dans le sens de la longueur du véhicule.

3. Ensemble de cadre auxiliaire selon les revendications 1 ou 2, **caractérisé en ce que** des moyens structurels affaiblissent de manière définie la tôle sacrifiée (3) vis-à-vis de forces agissant dans le sens de la longueur du véhicule.

4. Ensemble de cadre auxiliaire selon l'une des revendications précédentes, **caractérisé en ce que** l'affaiblissement défini de la tôle sacrifiée (3) est réalisé sous la forme d'un alésage tel que le ou les moyens de fixation (5) reliés à la tôle sacrifiée (3) se déchirent de la tôle sacrifiée (3) à partir d'une force longitudinale définie agissant vers l'arrière dans le sens de la longueur du véhicule.

5. Ensemble de cadre auxiliaire selon l'une des revendications précédentes, **caractérisé en ce que** la tôle sacrifiée (3) est réalisée en un matériau, notamment un acier, dont la résistance est inférieure à celle du matériau des parties portantes (2) du châssis.

6. Ensemble de cadre auxiliaire selon l'une des revendications précédentes, **caractérisé en ce que** au moins une partie des parties portantes (2) du châssis qui résistent à de fortes charges est réalisée en acier au bore.

7. Ensemble de cadre auxiliaire selon l'une des revendications précédentes, **caractérisé en ce que** dans un deuxième plan situé à distance de leur plan de fixation à la tôle sacrifiée (3), le moyen de fixation (5) relié à la tôle sacrifiée (3) est soutenu essentiellement dans le sens de la longueur du véhicule par un composant de soutien (10) relié au châssis du véhicule.

8. Ensemble de cadre auxiliaire selon l'une des revendications précédentes, **caractérisé en ce que** le moyen de fixation (5) relié à la tôle sacrifiée (3) est un goujon fileté vissé dans un écrou soudé à la tôle sacrifiée (3).

9. Ensemble de cadre auxiliaire selon l'une des revendications précédentes, **caractérisé en ce que** le cadre auxiliaire (9) de train de roulement est configuré comme élément de train de roulement résistant à la flexion et à la torsion.
